# EUROPEAN PATENT APPLICATION

(11) **EP 4 484 886 A1**
(43) Date of publication of application: **01.01.2025**
(21) Application number: 23758978.3
(22) Date of filing: 03.02.2023
(51) Int. Cl.: G01C 15/00, G01S 17/08

(54) **LASER LINE-PROJECTION DEVICE**

(30) Priority: 24.02.2022 CN 202220382705 U
(71) Applicant: Changzhou Huada Kejie Opto-Electro Instrument Co., Ltd., Changzhou, Jiangsu 213023 (CN)
(72) Inventor: ZHANG, Ou, hangzhou, Jiangsu 213000 (CN); ZHU, Weiping, hangzhou, Jiangsu 213000 (CN)
(74) Representative: Lambsdorff & Lange Patentanwälte Partnerschaft mbB
(86) International application number: PCT/CN2023/074344
(87) International publication number: WO 2023/160353

(57) **Abstract**

The present patent application relates to the field of measurement and positioning instruments, and it involves a laser collimator. A laser line device with ranging function includes a bracket, a suspension system, a laser leveling module, and a laser ranging module. The suspension system is movably connected to the bracket and allows the suspension system to freely swing to a vertical state due to gravity; the laser leveling module and the laser ranging module are fixedly installed on the suspension system. The laser leveling module projects a cross beam onto a plane and has an intersection point, while the axis of the ranging beam emitted by the laser ranging module passes through the intersection point. The patent application ensures the consistency of the emission direction of the laser leveling module and the ranging module. At the same time, by reasonably integrating and arranging the positions of the laser emitters in the laser leveling module and the ranging module, the emission axis of the laser ranging module coincides with the intersection point projected by the projection module, which brings convenience to the measurement and layout process and also improves the measurement accuracy, thus helping to enhance work efficiency.

## Description

### TECHNICAL FIELD

This patent application relates to the field of measurement and positioning instruments, and relates to a laser collimation instrument.

### BACKGROUND

In the current construction scenario, it is common to use a laser leveler in combination with a rangefinder. However, due to the fact that both instruments occupy a certain volume, there are inconveniences in carrying and placing them. Additionally, using the laser leveler and rangefinder separately requires manual operation for positioning twice, inevitably leading to errors.

### SUMMARY OF DISCLOSURE

The technical problem to be solved by the patent application is to provide a laser line device with ranging function, which combines the functions of leveling and ranging, allowing for simultaneous leveling and ranging in one operation. This not only facilitates the measurement and layout process, but also eliminates errors caused by dual positioning, thereby improving measurement accuracy and work efficiency.

The patent application provides a laser line device, which includes a bracket, a suspension system, a laser leveling module, and a laser ranging module. The suspension system is movably connected to the bracket and allows the suspension system to freely swing to a vertical state due to gravity; The laser leveling module and the laser ranging module are fixedly installed on the suspension system. The laser leveling module projects a cross beam onto a plane and has an intersection point, while the axis of the ranging beam emitted by the laser ranging module passes through the intersection point.

Preferably, the laser leveling module further comprises an indicator point laser, wherein the indicator point laser emits a pointing beam parallel to and as close as possible to the ranging beam.

Preferably, the suspension system is a dual-degree-of-freedom cross suspension system.

Preferably, the dual-degree-of-freedom cross suspension system comprises a main shaft, a secondary shaft, a suspension frame, a fixed frame, and a suspension bracket. The main shaft passes through the suspension bracket and is hinged to the suspension frame through bearings at both ends. The main shaft has a radial main shaft hole at its center. The secondary shaft passes through the main shaft hole and is hinged to the fixed frame through bearings at both ends. The fixed frame is fixedly connected to the bracket, and the laser leveling module and the laser ranging module are fixedly mounted on the suspension bracket.

Preferably, the laser leveling module includes a vertical line laser module and a horizontal line laser module, with the laser lines emitted by the vertical line laser module and the horizontal line laser module forming planes that are perpendicular to each other.

Preferably, a planar Cartesian coordinate system is established with the vertical plane, with the plane of the coordinate system as the reference plane; The ranging laser axis of the laser ranging module passes through the origin of the coordinate system and is perpendicular to the reference plane. The projected light rays of the vertical line laser module pass through the Y-axis of the coordinate system and are perpendicular to the reference plane, while the projected light rays of the horizontal line laser module pass through the X-axis of the coordinate system and are perpendicular to the reference plane.

Preferably, the indication point laser emits an indicator beam that is perpendicular to the reference plane and as close to the origin as possible.

Preferably, the laser leveling module's laser beam projection direction is the same as or opposite to the direction of the laser beam emitted by the laser ranging module.

Preferably, the suspension system also includes a position locking module, which locks the relative angle between the suspension system and the bracket when the position locking module is activated.

This patent application combines the line projection and ranging functions in a laser line device with ranging capabilities. By utilizing the self-leveling function of the line projector, it ensures the consistency of the emission direction of the laser leveling module and the ranging module. Additionally, by integrating and arranging the positions of the laser emitters in the laser leveling and ranging modules, the emitted optical axis of the laser ranging module coincides with the intersection point of the projected lines from the laser leveling module. This not only brings convenience to the processes of measurement and layout but also enhances the precision of measurements, thus contributing to improved work efficiency.

### BRIEF DESCRIPTION OF DRAWINGS

Figure 1 shows a schematic diagram of the three-dimensional structure of the laser line device with ranging capabilities in this patent application.
Figure 2 shows a schematic diagram of the arrangement of the laser leveling module and the laser ranging module in this embodiment.
Figure 3 shows an exploded view of the components of the suspension system in this embodiment.
Figure 4 shows a side view schematic diagram of the working state in this embodiment.
Figure 5 shows a top view schematic diagram of the working state in this embodiment.

In the figure: 1 bracket, 2 suspension system, 3 laser leveling module, 4 laser ranging module, 21 main shaft, 22 secondary shaft, 23 suspension frame, 24 fixed frame, 25 suspension bracket, 26 main shaft hole, 31 vertical laser module, 32 horizontal line laser module, 33 indication point laser.

### DETAILED DESCRIPTION

The following specific embodiments are presented to further illustrate the patent application. It should be understood that these embodiments are only used to illustrate the patent application and not to limit the scope of the patent application. Furthermore, it should be understood that, after reading the content of the patent application, those skilled in the art can make various changes or modifications to the patent application, and these equivalent forms also fall within the scope of the claims attached to the patent application.

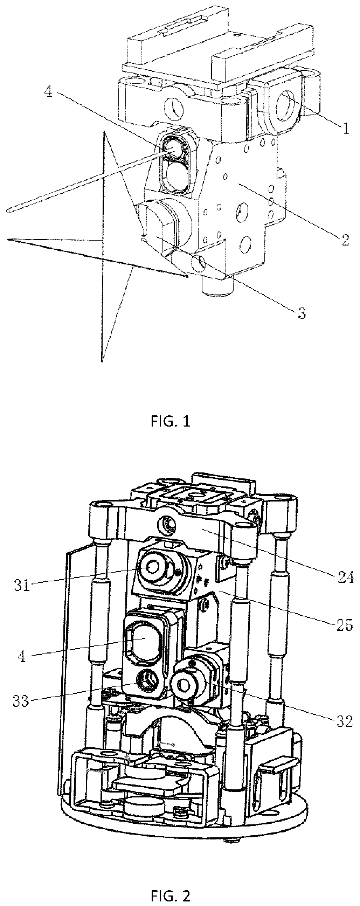

As shown in Figure 1, a laser line device with ranging function includes a bracket 1, a suspension system 2, a laser leveling module 3, and a laser ranging module 4. The suspension system 2 is movably connected to the bracket 1, allowing it to freely swing to a suspended state under gravity. The laser leveling module 3 and the laser ranging module 4 are fixedly mounted on the suspension system 2. The laser leveling module 3 projects a cross beam onto a plane with a point of intersection, and the axis of the ranging beam emitted by the laser ranging module 4 passes through this intersection point.

In this patent application, in order to visually observe the actual ranging position, the laser leveling module 3 further includes a pointing laser 33. The pointing laser 33 emits a pointing beam that is parallel to the ranging beam and is positioned as close as possible to the ranging beam. This is to ensure that the projection point of the pointing beam coincides with the ranging point, thereby eliminating measurement errors.

As shown in Figure 2, in this embodiment, the laser leveling module 3 includes a vertical line laser module 31 and a horizontal line laser module 32. The laser lines emitted by the vertical line laser module 31 and the horizontal line laser module 32 form planes that are mutually perpendicular. When projected onto a plane, they will form a vertical intersecting crossbeam, serving as reference lines for layout operations.

In order to make the projection point of the indicating beam coincide with the intersection of the crosshair, in this embodiment, a planar rectangular coordinate system is established with the vertical plane as the reference plane. The ranging laser axis of the laser ranging module 4 passes through the origin of the coordinate system and is perpendicular to the reference plane, the projection light of the vertical line laser module 31 passes through the Y-axis of the coordinate system and is perpendicular to the reference plane, and the projection light of the horizontal line laser module 32 passes through the X-axis of the coordinate system and is perpendicular to the reference plane. As a preference, the indicating laser beam emitted by the indication point laser 33 is perpendicular to the reference plane and is positioned as close as possible to the origin.

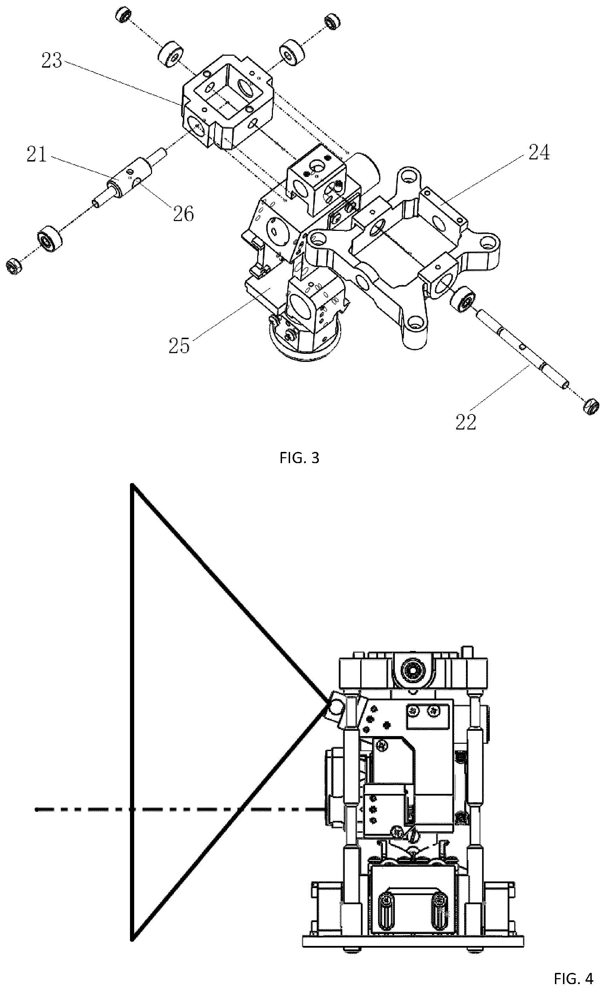

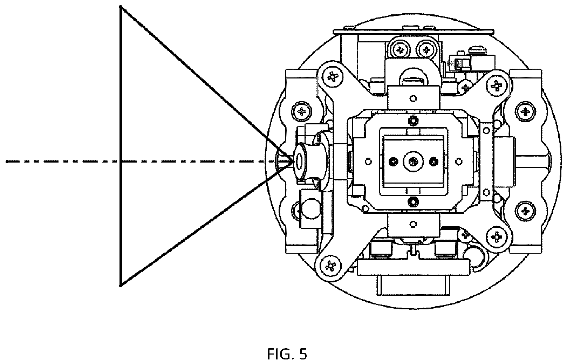

In this embodiment, as shown in Figures 3, 4, and 5, the suspension system 2 is a dual-degree-of-freedom cross suspension system. The dual-degree-of-freedom cross suspension system includes a main shaft 21, a secondary shaft 22, a suspension frame 23, a fixed frame 24, and a suspension bracket 25. The main shaft 21 passes through the suspension bracket 25 and is hinged to the suspension frame 23 by bearings at both ends. The main shaft 21 has a radially oriented main shaft hole 26 at its center. The secondary shaft 22 passes through the main shaft hole 26 and is hinged to the fixed frame 24 by bearings at both ends. The fixed frame 24 is fixedly connected to the support 1. the laser leveling module 3 and the laser ranging module 4 are fixedly mounted on the suspension bracket 25. Through the two shaft systems vertically crossed, the suspension frame 25 can swing freely with gravity to ensure the stability and consistency of the ranging beam direction.

In this embodiment, in order to adapt to different measurement environments and meet the requirements for both forward and reverse measurements, the laser beam projection direction of the laser leveling module 3 is the same as or opposite to the laser beam emission direction of the laser ranging module 4. This allows for the measurement of distances in both directions, making it convenient for users to select the operation according to their own needs.

The patent application can be further described as follows: a position locking module is also installed on the suspension system 2, and when the position locking module is activated, the relative angle between the suspension system 2 and the support 1 is locked. In this way, when the back surface that this device is measuring against is not a vertical plane, natural suspension measurement can be used once, and then the locking module can be opened while the device is in a state of natural suspension to measure against the back surface once more. By combining the distances of the projected light beam point during the two measurements, the angle of inclination of the back surface can be calculated, facilitating the precise adjustment of the wall.

## Claims

1. A laser line device, comprising a bracket (1), a suspension system (2), a laser leveling module (3), and a laser ranging module (4);
the suspension system (2) is movably connected to the bracket (1) and allows the suspension system (2) to freely swing to a suspended state under gravity;
the laser leveling module (3) and the laser ranging module (4) are fixedly mounted on the suspension system (2), the laser leveling module (3) projects a crossing beam on a plane with a intersection point, and the axis of the ranging beam emitted by the laser ranging module (4) passes through the intersection point.

2. A laser line device as claimed in claim 1, **characterized in that** the laser leveling module (3) further comprises an indication point laser (33), and the indicator beam emitted by the indication point laser (33) is parallel to and as close as possible to the ranging beam.

3. A laser line device according to claim 1 or 2, wherein the suspension system (2) is a dual-degree-of-freedom cross suspension system.

4. A laser line device according to claim 3, **characterized in that**:
the dual-degree-of-freedom cross suspension system comprises a main shaft(21), a secondary shaft (22), a suspension frame (23), a fixed frame (24), and a suspension bracket (25);
the main shaft (21) passes through the suspension bracket (25) and is hinged on the suspension frame (23) through bearings at both ends. A radial main shaft hole (26) is opened in the center of the main shaft (21), and the secondary shaft (22) passes through the main shaft hole (26) and is hinged on the fixed frame (24) through bearings at both ends. the fixed frame (24) is fixedly connected to the bracket (1), and the laser leveling module (3) and the laser ranging module (4) are fixedly installed on the suspension bracket (25).

5. A laser line device according to claim 3, **characterized in that**:
the laser leveling module (3) comprises a vertical line laser module (31) and a horizontal line laser module (32), and the planes formed by the laser lines emitted by the vertical line laser module (31) and the horizontal line laser module (32) are perpendicular to each other.

6. A laser line device according to claim 5, **characterized in that**: a plane Cartesian coordinate system is established with a suspended surface, and the plane where the coordinate system is located is taken as the reference plane; the ranging laser axis of the laser ranging module (4) passes through the origin of the coordinate system and is perpendicular to the reference plane, the projection light of the vertical line laser module (31) passes through the Y-axis of the coordinate system and is perpendicular to the reference plane,the projection light of the horizontal line laser module (32) passes through the X-axis of the coordinate system and is perpendicular to the reference plane.

7. A laser line device according to claim 6, **characterized in that** the indication beam emitted by the indication point laser (33) is perpendicular to the reference plane and as close to the origin as possible.

8. A laser line device according to claim 3, **characterized in that** the laser beam projection direction of the laser leveling module (3) is the same as or opposite to the laser beam direction emitted by the laser ranging module (4).

9. A laser line device according to claim 3, **characterized in that** the suspension system(2) also includes a position locking module, which locks the relative angle between the suspension system(2) and the bracket(1) when the position locking module is activated.
